Europäisches Patentamt

European Patent Office

Office européen des brevets

(19)

(11) Veröffentlichungsnummer : **0 042 520**
**B1**

(12) **EUROPÄISCHE PATENTSCHRIFT**

(45) Veröffentlichungstag der Patentschrift :
21.03.84

(51) Int. Cl.³ : **C 01 G 49/06**

(21) Anmeldenummer : **81104341.3**

(22) Anmeldetag : **05.06.81**

---

(54) **Verfahren zur Herstellung von Eisenoxidgelbpigmenten mit verbesserter Reinheit sowie deren Verwendung.**

---

(30) Priorität : **19.06.80 DE 3022875**

(43) Veröffentlichungstag der Anmeldung :
**30.12.81 Patentblatt 81/52**

(45) Bekanntmachung des Hinweises auf die Patenterteilung : **21.03.84 Patentblatt 84/12**

(84) Benannte Vertragsstaaten :
**BE DE FR GB IT NL SE**

(56) Entgegenhaltungen :
**DE-B- 2 758 229**

(73) Patentinhaber : **BAYER AG**
**Konzernverwaltung RP Patentabteilung**
**D-5090 Leverkusen 1 Bayerwerk (DE)**

(72) Erfinder : **Kiemle, Peter, Dr.**
**Doerperhofstrasse 39**
**D-4150 Krefeld 1 (DE)**
Erfinder : **Hund, Franz, Dr.**
**Scheiblerstrasse 89**
**D-4150 Krefeld 1 (DE)**
Erfinder : **Pflugmacher, Ingo, Dr.**
**Asternstrasse 16**
**D-4005 Meerbusch 3 (DE)**
Erfinder : **Rambold, Wolfgang, Dr.**
**Bethelstrasse 12**
**D-4150 Krefeld 1 (DE)**

Verfahren zur Herstellung von Eisenoxidgelbpigmenten mit verbesserter Reinheit sowie deren Verwendung

Die vorliegende Erfindung betrifft ein Verfahren zur Herstellung von Eisenoxidgelbpigmenten mit verbesserter Farbreinheit durch Anwendung des Prinzips der Magnetscheidung, sowie die Verwendung dieser Pigmente.

Die Herstellung von $\alpha$-FeOOH-Eisenoxid-Gelb-Pigmenten erfolgt nach verschiedenen Verfahren, unter anderem nach dem Anilin- bzw. Penniman-Verfahren (DE-Patentschrift 515 758, US-Patentschrift 1 368 748).

Beim Anilinverfahren wird die Reduktion von Nitrobenzol zu Anilin mit metallischem Eisen so gesteuert, daß sich dabei möglichst reines $\alpha$-FeOOH bildet. Beim Penniman-Verfahren wird metallisches Eisen mit Luft in Gegenwart von $\alpha$-FeOOH-Keimen oxidiert.

Dunkel gefärbte Verunreinigungen können bei der Herstellung von Eisenoxid-Gelb-Pigmenten nach den obengenannten oder nach anderen Verfahren entstehen oder aus den Rohstoffen oder der Apparatur in das Produkt gebracht werden. Diese beeinträchtigen die Farbeigenschaften der reinen und hellen Pigmente erheblich. Bisher bestand keine Möglichkeit auf diese Weise verunreinigte Pigmente in ihren Farbeigenschaften zu verbessern.

Schon geringe Mengen dunkel gefärbter Verunreinigungen beeinträchtigen die Farbeigenschaften von reinen Pigmenten erheblich. Um dies zu demonstrieren wurde eine wäßrige Suspension eines reinen handelsüblichen Eisenoxid-Gelb-Pigmentes (Bayferrox 1420 der BAYER AG) mit verschiedenen Mengen von schwarzen, feinteiligem Magnetit ($Fe_3O_4$) intensiv gemischt. Als Vertreter dunkel gefärbter Verunreinigungen wurde der Eisenoxid-Schwarz Typ 320 der BAYER AG gewählt.

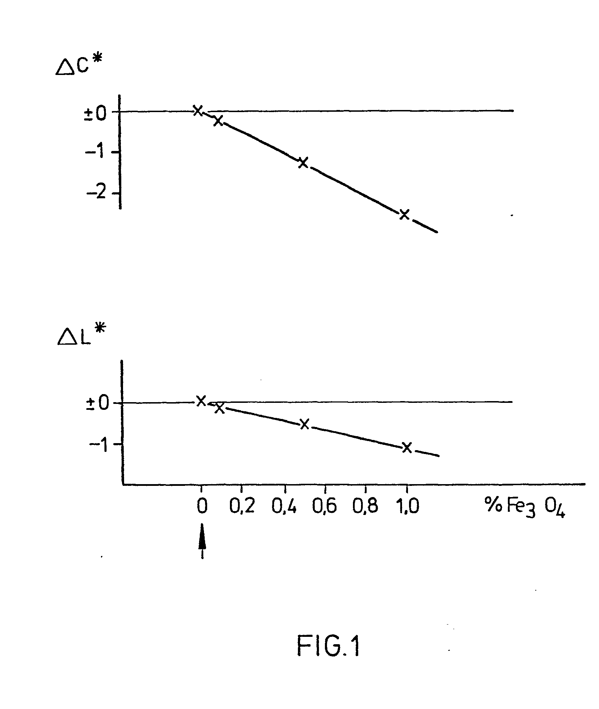

Diese Mischungen wurden filtriert, das Filtergut getrocknet und von der Pigmentmischung die Farbwerte bestimmt. Die Bestimmung der Farbwerte erfolgte im Purton (DIN 55985) nach der CIELAB-Methode (DIN 6174) (siehe auch Ullmann's « Enzyklopädie der technischen Chemie », 4. Auflage, Band 18, Seite 559, Weinheim 1979). Aus Fig. 1 sind die Einflüsse der Verunreinigungen auf die Farbreinheit der Pigmente ersichtlich. Dabei gibt die Farbsättigung den Abstand der untersuchten Probe im Farbraum vom Unbuntpunkt an. Die Farben sind um so reiner, je größer dieser Wert wird. Ebenso ist eine möglichst große Helligkeit der Pigmente erwünscht.

In Fig. 1 sind jeweils die Änderungen der Farbsättigung ($\Delta C^*$) und der Helligkeit ($\Delta L^*$) in CIELAB-Einheiten angegeben. Eine Änderung von 0,5 Einheiten in Sättigung und Helligkeit sind bei Gelbpigmenten mit dem Auge gut wahrnehmbar.

Der vorliegenden Erfindung lag somit die Aufgabe zugrunde, diese feinteiligen, die Farbeigenschaften beeinträchtigenden Verunreinigungen von den Pigmenten zu trennen.

Es wurde überraschenderweise gefunden, daß sich die Abtrennung dieser kleiner Mengen anders gefärbter Verunreinigungen von in großen Mengen vorliegenden feinteiligen Eisenoxidpigmenten mit der Magnetscheidung vorteilhaft durchführen läßt.

Das Verfahren der Magnetscheidung wird zwar schon seit Ende des letzten Jahrhunderts zur Trennung von verschieden stark magnetischen Stoffen verwendet. Dabei diente dieses Verfahren vor allem zur Erzaufbereitung, insbesondere von Eisenerzen. Auch wurde in neuerer Zeit die Magnetscheidung zur Reinigung von Kaolinen beschrieben (DE-Offenlegungsschrift 2 420 436, DE-Offenlegungsschrift 2 534 044), wobei die eisenhaltigen magnetisierbaren Verunreinigungen durch Magnetscheidung von den diamagnetischen Kaolinen getrennt werden.

In der DE-Auslegeschrift 2 758 229 wird die gleichzeitige Herstellung von Gips und Magnetit beschrieben. Dabei wird Eisen(II)-sulfat mit Kalkstein und Luft umgesetzt und die entsprechende Mischung aus etwa gleichen Teilen Gips und Magnetit durch Magnetscheidung getrennt.

Der Gegenstand der Erfindung ist ein Verfahren zur Herstellung von nach dem Penniman- bzw. dem Anilin-Prozeß gewonnenen Eisenoxidgelbpigmenten mit erhöhter Farbreinheit, welches dadurch gekennzeichnet ist, daß $Fe_3O_4$ und Kohlenstoff enthaltende Verunreinigungen durch Magnetscheidung abgetrennt werden.

Besonders vorteilhaft wird dabei die Magnetscheidung vor dem letzten Trocknungsschritt in Suspension vorgenommen ; sie kann vor, während oder nach einer gegebenenfalls durchgeführten anorganischen und/oder organischen Nachbehandlung der Pigmente erfolgen.

Die Wirkung der Magnetscheidung kann durch die Zugabe von Konditionierungsmittel zu der zu reinigenden Pigmentsuspension noch unterstützt werden. Geeignete Konditionierungsmittel für Eisenoxidpigment-Suspensionen sind zum Beispiel Phosphat-, Silikat-, Citrat-, Malat- und Tartrat-Anionen.

Die nach dem erfindungsgemäßen Verfahren hergestellten Eisenoxidpigmente können sowohl zur Pigmentierung von Lacken, Kunststoffen, wäßrigen Dispersionen und Baustoffen als auch als Ausgangsmaterial zur Herstellung von magnetischen Aufzeichnungsmaterialien verwendet werden.

Nachfolgend soll das erfindungsgemäße Verfahren beispielhaft erläutert werden, ohne es jedoch einzuschränken.

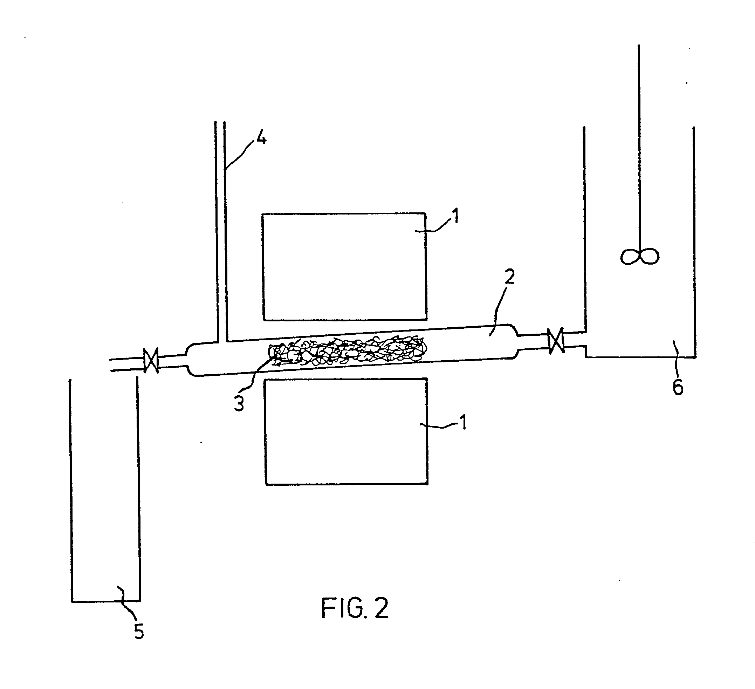

Fig. 2 zeigt die Apparatur, in der alle im folgenden beschriebenen Versuche durchgeführt wurden.

In einem Elektromagnet (1) mit etwa 4 kOe Feldstärke befindet sich ein Glasrohr (2), das mit Stahlwolle (3) zur Erhöhung des Feldgradienten gefüllt ist. Die zu untersuchende Pigmentsuspension wird aus dem Vorratsgefäß (6), das mit einem Rührer versehen ist, durch den Magneten geleitet und in der Vorlage (5) aufgefangen. Die Entlüftung erfolgt über ein Rohr (4).

## Beispiel 1

1 000 ml einer Suspension mit einem Feststoffgehalt von 50 g/l eines nach dem Anilinverfahren mit Gußeisenspänen hergestellten (deutsche Patentschrift 515 758), gewaschenen Eisenoxidgelb-Schlamms mit $Fe_3O_4$- und C-Gehalt werden in 5 Minuten durch die in Abbildung 2 beschriebene Apparatur geleitet. Die Suspension wird filtriert und das Pigment bei 140 °C getrocknet. Die gemessenen Farbwerte des Gelbpigments gegenüber der nicht magnetgereinigten Vergleichsprobe sind :

|  | L* | C* | ΔL* | ΔC* |
|---|---|---|---|---|
| Vergleichsprobe ohne Magnetscheidung | 49,5 | 33,4 |  |  |
|  |  |  | + 2,0 | + 3,7 |
| Probe nach Magnetscheidung | 51,5 | 37,1 |  |  |

Die Δ-Werte zeigen die erzielte Farbverbesserung durch die Magnetscheidung.

## Beispiel 2

Eine gewaschene Probe eines Eisenoxidgelb-Schlammes wird auf einen Feststoffgehalt von 175 g/l eingestellt und unter Rühren auf 80 °C erwärmt. Unter weiterem Rühren wird in 30 Minuten mit 0,5 % $P_2O_5$, zugegeben als $Na_4P_2O_7$ in Form einer wäßrigen Lösung mit 25 g/l, versetzt und 30 Minuten bei 80 °C nachgerührt. Die Suspension wird auf 50 g/l verdünnt und ein Liter davon in 5 Minuten durch den Magneten geschickt.

|  |  |  | Farbabstand | |
|---|---|---|---|---|
| Farbwerte : | L* | C* | ΔL* | ΔC* |
| Probe vor der Magnetreinigung | 51,1 | 37,7 |  |  |
|  |  |  | + 4,2 | + 6,9 |
| Probe nach der Magnetreinigung | 55,3 | 44,6 |  |  |

Als überraschender Effekt hat sich nach der Magnetscheidung an einem nach dem Anilinverfahren hergestellten Eisenoxidgelb (α-FeOOH) noch eine Abnahme des Kohlenstoffgehaltes der untersuchten Pigmente ergeben :

C-Gehalt vor der Magnetscheidung : 0,61 %
C-Gehalt nach der Magnetscheidung : 0,10 %

## Beispiel 3

Eine gewaschene Probe eines Eisenoxidgelb-Schlammes wird auf einen Feststoffgehalt von 175 g/l eingestellt, unter Rühren auf 80 °C erwärmt und mit NaOH auf pH 9 eingestellt. In 30 Minuten werden 0,1 % $SiO_2$ als Na-Wasserglas in 100 ml Wasser zugegeben. Danach wird in 30 Minuten der pH-Wert mit verdünnter Schwefelsäure bis zum Neutralpunkt eingestellt. Die Pigmentsuspension wird auf 50 g/l Feststoffgehalt verdünnt und ein Liter davon in 5 Minuten durch den Magneten geschickt.

|  |  |  | Farbabstand | |
|---|---|---|---|---|
| Farbwerte : | L* | C* | ΔL* | ΔC* |
| Probe vor der Magnetscheidung | 51,4 | 37,7 |  |  |
|  |  |  | + 4,1 | + 6,4 |
| Probe nach der Magnetscheidung | 55,5 | 44,1 |  |  |

## Beispiel 4

Versuchsdurchführung wie Beispiel 2, nur werden als Konditionsmittel gegeben :

3

0 042 520

a) 0,1 % Natriumcitrat
b) 0,1 % Natriumtartrat
c) 0,1 % Äpfelsäure

Farbwerte :

| Beispiel | | L* | C* | Farbabstand | |
|---|---|---|---|---|---|
| | | | | $\Delta$L* | $\Delta$C* |
| a) | Vor der Magnetscheidung | 51,4 | 37,1 | + 3,1 | + 5,3 |
| | Nach der Magnetscheidung | 54,5 | 42,4 | | |
| b) | Vor der Magnetscheidung | 51,4 | 37,1 | + 2,6 | + 4,5 |
| | Nach der Magnetscheidung | 54,0 | 41,6 | | |
| c) | Vor der Magnetscheidung | 51,4 | 37,1 | + 2,9 | + 5,4 |
| | Nach der Magnetscheidung | 54,3 | 42,5 | | |

**Ansprüche**

1. Verfahren zur Herstellung von nach dem Penniman- bzw. dem Anilin-Prozeß gewonnenen Eisenoxidgelbpigmenten mit erhöhter Farbreinheit, dadurch gekennzeichnet, daß $Fe_3O_4$ und Kohlenstoff enthaltende Verunreinigungen durch Magnetscheidung abgetrennt werden.

2. Verfahren gemäß Anspruch 1, dadurch gekennzeichnet, daß die Magnetscheidung vor dem letzten Trocknungsschritt in Suspension vorgenommen wird.

3. Verfahren gemäß einem der Ansprüche 1 bis 2, dadurch gekennzeichnet, daß die Magnetscheidung vor, während oder nach einer gegebenenfalls durchgeführten anorganischen und/oder organischen Nachbehandlung der Pigmente erfolgt.

4. Verwendung der gemäß einem der Ansprüche 1 bis 3 hergestellten Eisenoxidpigmente zur Pigmentierung von Lacken, Kunststoffen, wäßrigen Dispersionen und Baustoffen.

5. Verwendung der gemäß einem der Ansprüche 1 bis 3 hergestellten Eisenoxidpigmente als Ausgangsmaterial zur Herstellung von magnetischen Aufzeichnungsmaterialien.

**Claims**

1. Process for the production of iron oxide yellow pigments obtained by the Penniman process or the aniline process and having increased purity of colour, characterised in that $Fe_3O_4$ and impurities containing carbon are separated off by magnetic separation.

2. Process according to Claim 1, characterised in that magnetic separation is effected in suspension before the last drying step.

3. Process according to one of Claims 1 to 2, characterised in that magnetic separation is carried out before, during or after an optional inorganic and/or organic aftertreatment of the pigments.

4. Use of the iron oxide pigments produced according to one of Claims 1 to 3 for pigmenting laquers, plastics, aqueous dispersions and building materials.

5. Use of the iron oxide pigments produced according to one of Claims 1 to 3 as a starting material for the production of magnetic recording materials.

**Revendications**

1. Procédé pour fabriquer des pigments jaunes d'oxyde de fer obtenus d'après le procédé de Penniman ou à l'aniline, de pureté chromatique élevée, caractérisé en ce que des impuretés contenant $Fe_3O_4$ et du carbone sont enlevées par séparation magnétique.

2. Procédé selon la revendication 1, caractérisé en ce que la séparation magnétique est effectuée en suspension avant la dernière étape de séchage.

3. Procédé selon l'une des revendications 1 et 2, caractérisé en ce que la séparation magnétique a lieu avant, pendant ou après un post-traitement inorganique et/ou organique éventuel des pigments.

4. Utilisation des pigments d'oxyde de fer fabriqués selon l'une des revendications 1 à 3 pour pigmenter des laques, des matières plastiques, des dispersions aqueuses et des matériaux de construction.

5. Utilisation des pigments d'oxyde de fer fabriqués selon l'une des revendications 1 à 3 en tant que matière de départ pour fabriquer des supports magnétiques d'enregistrement.

4

FIG.1

FIG. 2